# EUROPEAN PATENT APPLICATION

(11) **EP 4 847 853 A1**
(43) Date of publication of application: **02.12.2026**
(21) Application number: 25775951.4
(22) Date of filing: 03.02.2025
(51) Int. Cl.: F25B 41/22, F16K 15/02, F16K 27/02, F25B 5/02, F25D 11/02

(54) **CHECK VALVE AND REFRIGERATOR HAVING SAME**

(30) Priority: 29.03.2024 KR 20240043741
(71) Applicant: Samsung Electronics Co., Ltd., Suwon-si, Gyeonggi-do 16677 (KR)
(72) Inventor: CHU, Seulchan, Suwon-si Gyeonggi-do 16677 (KR); YOON, Youngchan, Suwon-si Gyeonggi-do 16677 (KR); KIM, Myounghun, Suwon-si Gyeonggi-do 16677 (KR); OH, Juik, Suwon-si Gyeonggi-do 16677 (KR)
(74) Representative: Gulde & Partner
(86) International application number: PCT/KR2025/099206
(87) International publication number: WO 2025/206909

(57) **Abstract**

A refrigerator according to an embodiment includes a main body including a freezing compartment and a refrigerating compartment, a heat pump including a compressor, a condenser, a first evaporator provided in the freezing compartment to cool the freezing compartment, and a second evaporator provided in the refrigerating compartment to cool the refrigerating compartment, an outlet pipe connected to an outlet of the first evaporator to transfer a refrigerant passing through the first evaporator to the compressor, and a check valve provided in the outlet pipe and configured to prevent the refrigerant from flowing backward in the outlet pipe, wherein the check valve includes a valve housing including an inlet, an outlet, and a guide flow path formed between the inlet and the outlet, a core configured to move forward and backward relative to the valve housing to allow a flow of the refrigerant from the inlet to the outlet and to block a flow of the refrigerant from the outlet to the inlet, and a stopper coupled to an outer circumferential surface of the valve housing and configured to receive the core, wherein the core is configured to be inserted between the valve housing and a portion of the stopper in a direction intersecting a direction from the inlet toward the outlet.

## Description

### [Technical Field]

The disclosure relates to a check valve applicable to a refrigerator.

### [Background Art]

In general, a refrigerator is a device that discharges cold air generated by a refrigeration cycle to lower a temperature in a storage compartment, thereby freezing or refrigerating food and the like.

In the refrigeration cycle, a refrigerant continuously repeats the process of turning from a gas back into a liquid. Such a cycle is divided into a compression process in a compressor, a condensation and heat release process in a condenser, an expansion process through a capillary tube, and an evaporation process in an evaporator, and these processes are interconnected to perform the functions of refrigerating and freezing.

The evaporator is operated using the compressor, and at this time, a phenomenon in which the refrigerant flows backward may occur due to a difference in evaporation pressure inside refrigerant piping.

### [Disclosure]

### [Technical Problem]

An aspect of the present disclosure provides a refrigerator including a simplified check valve that has a simple structure and is easy to assemble.

An aspect of the present disclosure provides a check valve including a valve housing, a stopper, and a core, which may be easily assembled or disassembled.

Technical tasks to be achieved in the present document are not limited to the technical tasks mentioned above, and other technical tasks not mentioned will be clearly understood by those skilled in the art from the description below.

### [Technical Solution]

A refrigerator according to an embodiment includes a main body including a freezing compartment and a refrigerating compartment, a heat pump including a compressor, a condenser, a first evaporator provided in the freezing compartment to cool the freezing compartment, and a second evaporator provided in the refrigerating compartment to cool the refrigerating compartment, an outlet pipe connected to an outlet of the first evaporator to transfer a refrigerant passing through the first evaporator to the compressor, and a check valve provided in the outlet pipe and configured to prevent the refrigerant from flowing backward in the outlet pipe, wherein the check valve includes a valve housing including an inlet, an outlet, and a guide flow path formed between the inlet and the outlet, a core configured to move forward and backward relative to the valve housing to allow a flow of the refrigerant from the inlet to the outlet and to block a flow of the refrigerant from the outlet to the inlet, and a stopper coupled to an outer circumferential surface of the valve housing and configured to receive the core, wherein the core is configured to be inserted between the valve housing and a portion of the stopper in a direction intersecting a direction from the inlet toward the outlet.

A refrigerator according to an embodiment includes a main body having a storage compartment, a heat pump including a compressor, a condenser, and an evaporator provided in the storage compartment to cool the storage compartment, an outlet pipe connected to an outlet of the evaporator to transfer a refrigerant passing through the evaporator to the compressor, and a check valve provided in the outlet pipe to prevent the refrigerant from flowing backward in the outlet pipe, the check valve including a valve housing including an inlet and an outlet, a core configured to move forward and backward relative to the valve housing, and a stopper coupled to an outer circumferential surface of the valve housing, configured to receive the core, and formed of a stainless steel sheet having an elastic force, wherein the stopper includes an elastic portion coupled to the outer circumferential surface of the valve housing, and an anti-dislodgement portion configured to partition an interior of the outlet pipe to prevent the core from being dislodged from the check valve when the refrigerant flows from the inlet to the outlet, wherein the core is configured to be inserted into an insertion opening formed between the valve housing and a portion of the stopper in a direction intersecting a direction from the inlet toward the outlet.

A check valve according to an embodiment includes a valve housing including an inlet and an outlet, a core configured to move forward and backward with respect to the valve housing to allow a flow of a refrigerant from the inlet to the outlet and to block a flow of the refrigerant from the outlet to the inlet, and a stopper coupled to an outer circumferential surface of the valve housing and configured to receive the core, wherein the valve housing includes an inlet body in which the inlet is formed, an outlet body in which the outlet is formed, and a connection body disposed between the inlet body and the outlet body to be coupled to the stopper, wherein the stopper includes an elastic portion coupled to the outer circumferential surface of the valve housing, and an anti-dislodgement portion disposed to be spaced apart from the elastic portion by a predetermined distance to prevent the core from being dislodged from the stopper when the refrigerant flows from the inlet to the outlet, wherein the outlet body includes an inclined portion whose thickness gradually decreases in a direction from the inlet toward the outlet, wherein the core is configured to be inserted into an insertion opening formed between an end of the inclined portion and the anti-dislodgement portion in a direction intersecting the direction from the inlet toward the outlet.

### [Description of Drawings]

FIG. 1 is a side cross-sectional view of a refrigerator including a check valve according to an embodiment.
FIG. 2 is a schematic diagram of a cold air supply device of a refrigerator including a check valve according to an embodiment.
FIG. 3 is an enlarged partial cross-sectional view of a check valve coupled to an outlet pipe according to an embodiment.
FIG. 4 is an exploded perspective view of a check valve applied to a refrigerator according to an embodiment.
FIG. 5 is an exploded perspective view of the check valve applied to the refrigerator according to an embodiment.
FIG. 6 is a cross-sectional view of the check valve applied to a refrigerator according to an embodiment.
FIG. 7 is a cross-sectional view illustrating a state in which a refrigerant flows in a forward direction in the check valve applied to a refrigerator according to an embodiment.
FIG. 8 is a cross-sectional view illustrating a state in which the refrigerant flows in a reverse direction in the check valve according to an embodiment.
FIG. 9 is a plan view of the check valve according to an embodiment.
FIG. 10 is a cross-sectional view taken along line A-A' of FIG. 6.

### [Modes of the Invention]

Various embodiments of the disclosure and terms used herein are not intended to limit the technical features described herein to specific embodiments, and should be understood to include various modifications, equivalents, or substitutions of the corresponding embodiments.

In describing the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

Terms such as "1st", "2nd", "primary", or "secondary" may be used simply to distinguish an element from other elements, without limiting the element in other aspects (e.g., importance or order).

Further, as used in the disclosure, the terms "front", "rear", "top", "bottom", "side", "left", "right", "upper", "lower", and the like are defined with reference to the drawings, and are not intended to limit the shape and position of any element.

It will be understood that when the terms "includes", "comprises", "including", and/or "comprising" are used in the disclosure, they specify the presence of the specified features, numbers, steps, operations, components, members, or combinations thereof, but do not preclude the presence or addition of one or more other features, numbers, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

A refrigerator according to an embodiment of the disclosure may include a main body.

The "main body" may include an inner case, an outer case positioned outside the inner case, and an insulation provided between the inner case and the outer case.

The "inner case" may include a case, a plate, a panel, or a liner forming a storage compartment (also referred to as a storage room). The inner case may be formed as one body, or may be formed by assembling a plurality of plates together. The "outer case" may form an appearance of the main body, and be coupled to an outer side of the inner case such that the insulation is positioned between the inner case and the outer case.

The "insulation" may insulate an inside of the storage compartment from an outside of the storage compartment to maintain inside temperature of the storage compartment at appropriate temperature without being influenced by an external environment of the storage compartment. According to an embodiment of the disclosure, the insulation may include a foaming insulation. The foaming insulation may be molded by fixing the inner case and the outer case with jigs, etc. and then injecting and foaming urethane foam as a mixture of polyurethane and a foaming agent between the inner case and the outer case.

According to an embodiment of the disclosure, the insulation may include a vacuum insulation in addition to a foaming insulation, or may be configured only with a vacuum insulation instead of a forming insulation. The vacuum insulation may include a core material and a cladding material accommodating the core material and sealing the inside with vacuum or pressure close to vacuum. However, the insulation is not limited to the above-mentioned foaming insulation or vacuum insulation, and may include various materials capable of being used for insulation.

The "storage compartment" may include a space defined by the inner case. The storage compartment may further include the inner case defining the space corresponding to the storage compartment. The storage compartment may store a variety of items, such as food, medicines, cosmetics, and the like, and the storage compartment may be configured to be open on at least one side for insertion and removal of the items.

The refrigerator may include one or more storage compartments. In a case in which two or more storage compartments are formed in the refrigerator, the respective storage compartments may have different purposes of use, and may be maintained at different temperatures. To this end, the respective storage compartments may be partitioned by a partition wall including an insulation.

The storage compartment may be maintained within an appropriate temperature range according to a purpose of use, and may include a "refrigerating compartment", a "freezing compartment", and a "temperature conversion compartment" according to purposes of use and/or temperature ranges. The refrigerating compartment may be maintained at an appropriate temperature to keep food refrigerating, and the freezing compartment may be maintained at an appropriate temperature to keep food frozen. "Refrigerating" may be keeping food cold without freezing the food, and for example, the refrigerating compartment may be maintained within a range of 0 degrees Celsius to 7 degrees Celsius. "Freezing" may be freezing food or keeping food frozen, and for example, the freezing compartment may be maintained within a range of -20 degrees Celsius to -1 degrees Celsius. The temperature conversion compartment may be used as either a refrigerating compartment or a freezing compartment according to or regardless of a user's selection.

The storage compartment may also be referred to by various terms, such as "vegetable compartment", "freshness compartment", "cooling compartment", and "ice-making compartment", in addition to "refrigerating compartment", "freezing compartment", and "temperature conversion compartment", and the terms, such as "refrigerating compartment", "freezing compartment", "temperature conversion compartment", etc., as used below are to be understood as representing storage compartments having the corresponding purposes of use and the corresponding temperature ranges.

The refrigerator according to an embodiment of the disclosure may include at least one door configured to open or close the open side of the storage compartment. The respective doors may be provided to open and close one or more storage compartments, or a single door may be provided to open and close a plurality of storage compartments. The door may be rotatably or slidably mounted to the front of the main body.

The "door" may seal the storage compartment in a closed state. The door, like the main body, may include an insulation to insulate the storage compartment in a closed state.

According to an embodiment, the door may include an outer door plate forming the front surface of the door, an inner door plate forming the rear surface of the door and facing the storage compartment, an upper cap, a lower cap, and a door insulation provided therein.

A gasket may be provided on the edge of the inner door plate to seal the storage compartment by coming into close contact with the front surface of the main body when the door is closed. The inner door plate may include a dyke that protrudes rearward to allow a door basket for storing items to be fitted.

According to an embodiment, the door may include a door body and a front panel that is detachably coupled to the front of the door body and forming the front surface of the door. The door body may include an outer door plate forming the front surface of the door body, an inner door plate forming the rear surface of the door body and facing the storage compartment, an upper cap, a lower cap, and a door insulator provided therein.

The refrigerator may be classified as French Door Type, Side-by-side Type, Bottom Mounted Freezer (BMF), Top Mounted Freezer (TMF), or Single Door Refrigerator according to the arrangement of the doors and the storage compartments.

The refrigerator according to an embodiment of the disclosure may include a cold air supply device for supplying cold air to the storage compartment.

The "cold air supply device" may include a machine, an apparatus, an electronic device, and/or a combination system thereof, capable of generating cold air and guiding the cold air to cool the storage compartment.

According to an embodiment of the disclosure, the cold air supply device may generate cold air through a cooling cycle including compression, condensation, expansion, and evaporation processes of refrigerants. To this end, the cold air supply device may include a refrigeration cycle device having a compressor, a condenser, an expander, and an evaporator to drive the refrigeration cycle. According to an embodiment of the disclosure, the cold air supply device may include a semiconductor, such as a thermoelectric element. The thermoelectric element may cool the storage compartment by heating and cooling actions through the Peltier effect.

The refrigerator according to an embodiment of the disclosure may include a machine compartment in which at least some components belonging to the cold air supply device are installed.

The "machine compartment" may be partitioned and insulated from the storage compartment to prevent heat generated by the components installed in the machine compartment from being transferred to the storage compartment. To dissipate heat from the components installed in the machine compartment, the machine compartment may communicate with outside of the main body.

The refrigerator according to an embodiment of the disclosure may include a dispenser provided on the door to provide water and/or ice. The dispenser may be provided on the door to allow access by the user without opening the door.

The refrigerator according to an embodiment of the disclosure may include an ice-making device that produces ice. The ice-making device may include an ice-making tray that stores water, an ice-moving device that separates ice from the ice-making tray, and an ice-bucket that stores ice produced in the ice-making tray.

The refrigerator according to an embodiment of the disclosure may include a controller for controlling the refrigerator.

The "controller" may include a memory for storing and/or recording data and/or programs for controlling the refrigerator, and a processor for outputting control signals for controlling the cold air supply device, etc. in accordance with the programs and/or data stored in the memory.

The memory may store or record various information, data, instructions, programs, and the like necessary for operation of the refrigerator. The memory may store temporary data generated while generating control signals for controlling components included in the refrigerator. The memory may include at least one of a volatile memory or a non-volatile memory, or a combination thereof.

The processor may control the overall operation of the refrigerator. The processor may control the components of the refrigerator by executing programs stored in memory. The processor may include a separate neural processing unit (NPU) that performs an artificial intelligence (AI) model operation. In addition, the processor may include a central processing unit (CPU), a graphics processor (GPU), and the like. The processor may generate a control signal to control the operation of the cold air supply device. For example, the processor may receive temperature information of the storage compartment from a temperature sensor and generate a cooling control signal to control an operation of the cold air supply device based on the temperature information of the storage compartment.

Furthermore, the processor may process a user input of a user interface and control an operation of the user interface in accordance with the programs and/or data memorized/stored in the memory. The user interface may be provided with an input interface and an output interface. The processor may receive the user input from the user interface. In addition, the processor may transmit a display control signal and image data for displaying an image on the user interface to the user interface in response to the user input.

The processor and memory may be provided integrally or may be provided separately. The processor may include one or more processors. For example, the processor may include a main processor and at least one sub-processor. The memory may include one or more memories.

The refrigerator according to an embodiment of the disclosure may include a processor and a memory for controlling all of the components included in the refrigerator, and may include a plurality of processors and a plurality of memories for individually controlling the components of the refrigerator. For example, the refrigerator may include a processor and a memory for controlling the operation of the cold air supply device in accordance with to an output of the temperature sensor. In addition, the refrigerator may be separately provided with a processor and a memory for controlling the operation of the user interface in accordance with the user input.

A communication module may communicate with external devices, such as servers, mobile devices, and other home appliances via a nearby access point (AP). The AP may connect a local area network (LAN) to which a refrigerator or a user device is connected to a wide area network (WAN) to which a server is connected. The refrigerator or the user device may be connected to the server via the WAN.

The input interface may include keys, a touch screen, a microphone, and the like. The input interface may receive the user input and pass the received user input to the processor.

The output interface may include a display, a speaker, and the like. The output interface may output various notifications, messages, information, and the like generated by the processor.

A check valve according to the concept of the present disclosure is not limited to being applied to the refrigerator as described above, and may be applied to various types of devices using a refrigeration cycle.

Hereinafter, an embodiment will be described in detail with reference to the accompanying drawings.

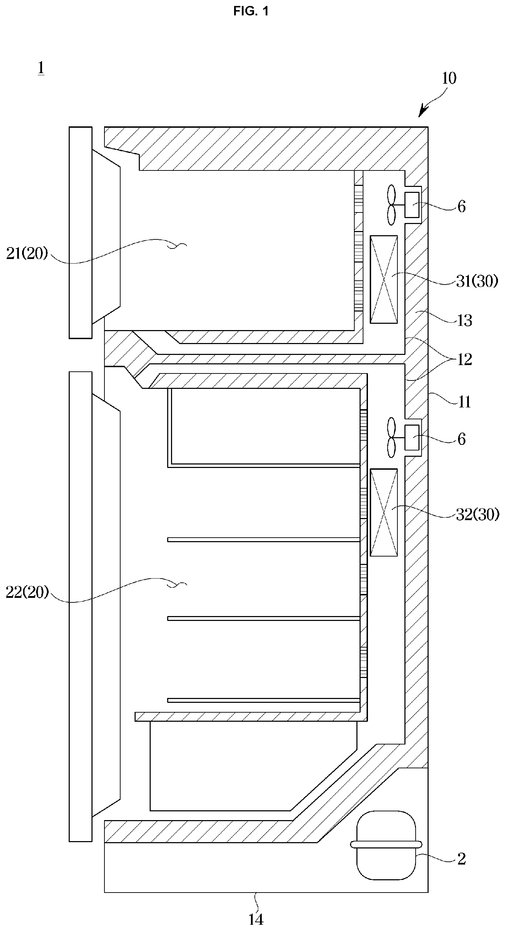

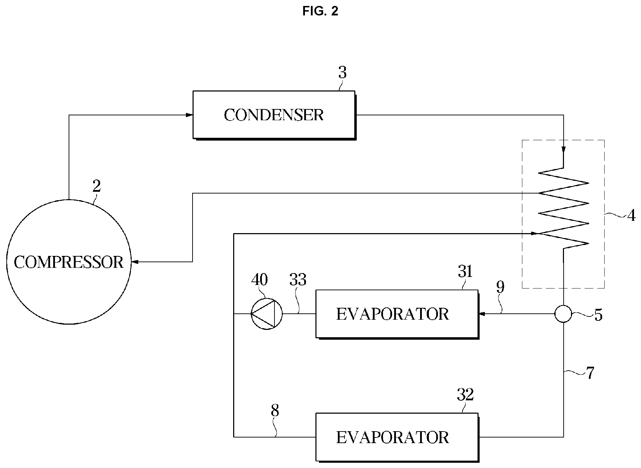

FIG. 1 is a side cross-sectional view of a refrigerator 1 including a check valve 40 according to an embodiment of the present disclosure, and FIG. 2 is a schematic diagram of a cold air supply device of the refrigerator 1 including the check valve 40 according to an embodiment of the present disclosure.

Referring to FIG. 1, the refrigerator 1 may include a main body 10, a storage compartment 20 partitioned and formed inside the main body 10, a door capable of opening and closing the storage compartment 20, and a cold air supply device that supplies cold air to the storage compartment 20.

The main body 10 may include an inner case 12 forming the storage compartment 20, an outer case 11 coupled to an outer side of the inner case 12 to form an exterior, and an insulation 13 foamed between the inner case 12 and the outer case 11 to thermally insulate the storage compartment 20. The inner case 12 may be formed of plastic material, and the outer case 11 may be formed of metal material.

A compressor 2 capable of compressing a refrigerant and a condenser 3 condensing the refrigerant compressed by the compressor 2 may be disposed at a rear lower side of the main body 10. The main body 10 may be formed in a substantially rectangular parallelepiped shape, and may include a lower surface 14 forming a lower portion of the main body 10. The lower surface 14 may be disposed nearly parallel to the ground when the refrigerator 1 is installed.

Referring to FIG. 2, the cold air supply device including the compressor 2, the condenser 3, a capillary tube, and an evaporator 30 may be included in the refrigerator 1. The compressor 2 may compress a gaseous refrigerant into a high-temperature, high-pressure gas, and the condenser 3 may cause the high-temperature, high-pressure refrigerant to release heat, thereby converting the refrigerant to a liquid state. The high-pressure liquid refrigerant may undergo a pressure reduction as it passes through the capillary tube.

The refrigerant depressurized by passing through the capillary tube may be selectively supplied via a three-way valve 5 disposed in a branch region where piping is installed to divide the refrigerant between a first evaporator 31 and a second evaporator 32.

In other words, when a branch pipe 7 through which the refrigerant may flow to the second evaporator 32 is closed by the three-way valve 5 and an inlet pipe 9 through which the refrigerant may flow to the first evaporator 31 is open, the refrigerant passing through the capillary tube may be supplied to the first evaporator 31. Conversely, when the inlet pipe 9 is closed and the branch pipe 7 is open, the refrigerant passing through the capillary tube may be supplied to the second evaporator 32.

The refrigerant passing through the capillary tube may flow into the evaporator 30 and may vaporize. The vaporizing refrigerant may absorb heat from the surroundings to cool air around the evaporator 30, and generated cold air may be blown to the storage compartment 20 of the refrigerator 1 by a blower fan 6. The vaporized refrigerant may then flow into the compressor 2 and be compressed into a high-temperature, high-pressure gas.

The storage compartment 20 may be partitioned into a freezing compartment 21 and a refrigerating compartment 22, and the evaporator 30 may also include the first evaporator 31 corresponding to the freezing compartment 21 and the second evaporator 32 corresponding to the refrigerating compartment 22.

The three-way valve 5 may be installed in a section that selectively distributes the refrigerant to the first evaporator 31 and the second evaporator 32 via the capillary tube. The refrigerant depressurized while passing through the capillary tube may flow along a flow path and may be selectively supplied to the first evaporator 31 or the second evaporator 32 by the three-way valve 5 installed in the branch region.

The refrigerant supplied to the first evaporator 31 may be evaporated in the first evaporator 31, and in doing so, cold air may be generated as heat is absorbed from the surroundings. The formed cold airmay then be provided back to the compressor 2. The second evaporator 32 may similarly form cold air.

The cold air generated in the first evaporator 31 and the second evaporator 32 may be supplied to the freezing compartment 21 and the refrigerating compartment 22 via corresponding blower fans 6, respectively.

When the refrigerant is supplied from the condenser 3 via the capillary tube to the evaporator 30, a load applied to a plurality of evaporators 30 may vary depending on a temperature difference between the freezing compartment 21 and the refrigerating compartment 22. As the loads on the freezing compartment 21 and the refrigerating compartment 22 differ, evaporation pressures of the first evaporator 31 and the second evaporator 32 may also differ.

In other words, due to an operation of the three-way valve 5, the pressure of the refrigerant in a downstream pipe 8, which is connected to an outlet after passing through the branch pipe 7 and the second evaporator 32, may be higher than the pressure of the refrigerant in an outlet pipe 33. As a result, the refrigerant may flow backward, rather than toward the compressor 2.

To address such an issue, the check valve 40 may be disposed in the outlet pipe 33 of the first evaporator 31 to prevent a high-pressure refrigerant from flowing backward into the first evaporator 31 through the outlet pipe 33.

In other words, the check valve 40 may prevent a reverse flow of the refrigerant from the evaporator 30 toward the compressor 2, thereby maintaining the flow of the refrigerant in one direction.

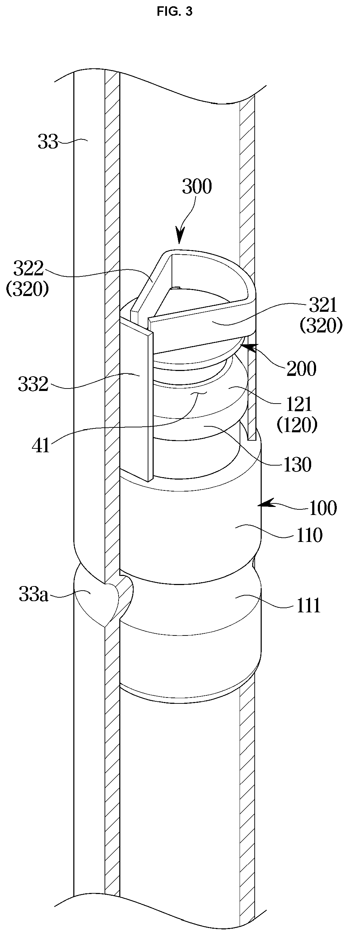

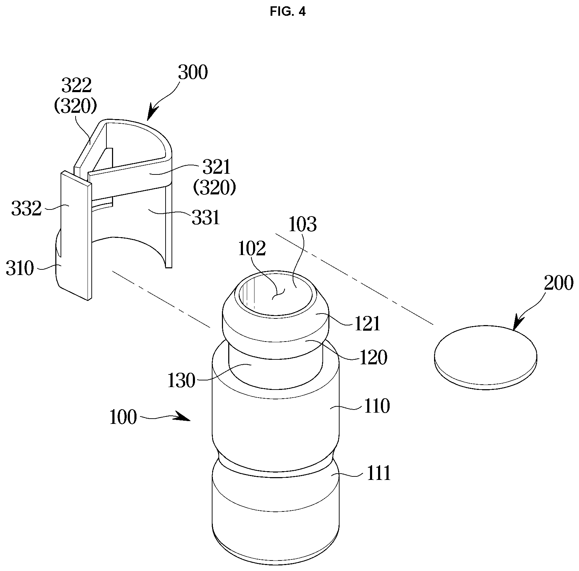

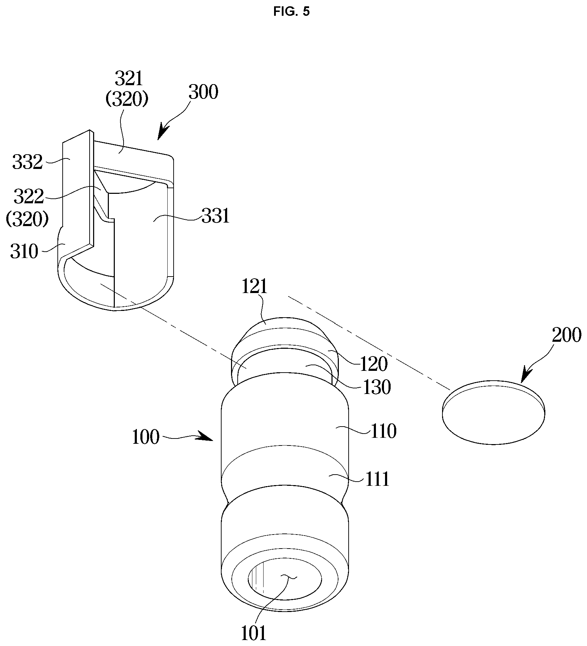

FIG. 3 is an enlarged partial cross-sectional view of the check valve 40 coupled to the outlet pipe 33 according to an embodiment, and FIGS. 4 and 5 are exploded perspective views of the check valve 40 applied to the refrigerator 1 according to an embodiment.

Referring to FIG. 3, the refrigerator 1 according to an embodiment may include the check valve 40 disposed inside the outlet pipe 33. The check valve 40 may maintain the flow of the refrigerant in one direction within the outlet pipe 33.

The check valve 40 according to an embodiment may include a valve housing 100, a core 200 moving forward and backward within the check valve, and a stopper 300 preventing the core 200 from being dislodging. The check valve 40 may include an insertion opening 41 formed by coupling of the valve housing 100 and the stopper 300. The core 200 may be inserted between the valve housing 100 and the stopper 300 through the insertion opening 41.

The valve housing 100 may include an inlet 101 through which the refrigerant enters, an outlet 102 through which the refrigerant exits, and a guide flow path 103 formed between the inlet 101 and the outlet 102. The valve housing 100 may be formed in a hollow cylindrical shape.

The valve housing 100 may include an inlet body 110 including the inlet 101, an outlet body 120 including the outlet 102, and a connection body 130 connecting the inlet body 110 and the outlet body 120. That is, the refrigerant passing through the inlet 101 may be discharged to the outlet 102 through the inlet body 110, the connection body 130, and the outlet body 120.

The inlet body 110 may be formed such that an outer diameter thereof is substantially equal to an inner diameter of the outlet pipe 33. That is, the inlet body 110 may be formed such that a minimal amount of refrigerant passes between an outer circumferential surface of the inlet body 110 and an inner surface of the outlet pipe 33.

The inlet body 110 may include a coupling groove 111 formed along an outer circumferential surface thereof for coupling with the outlet pipe 33. Specifically, the coupling groove 111 may be formed in a shape in which an outer diameter of the inlet body 110 gradually decreases in a direction from the inlet 101 toward the outlet 102 and then increases again.

The outlet body 120 may be in contact with the core 200. For example, when the refrigerant inside the outlet pipe 33 flows from the outlet 102 toward the inlet 101, the core 200 may move toward the outlet body 120 to contact the outlet body 120 and close the guide flow path 103. Conversely, when the refrigerant flows from the inlet 101 toward the outlet 102, the core 200 may move toward the stopper 300 to contact the stopper 300 and open the guide flow path 103.

The outlet body 120 may include an inclined portion 121 whose thickness gradually decreases in the direction from the inlet 101 toward the outlet 102. An end of the inclined portion 121 may contact one surface of the core 200. Specifically, the core 200 may contact the end of the inclined portion 121 when the refrigerant flows from the outlet 102 toward the inlet 101.

The connection body 130 may be connected to the inlet body 110 and the outlet body 120. The connection body 130 may be disposed between the inlet body 110 and the outlet body 120. A diameter of the connection body 130 may be smaller than diameters of the inlet body 110 and the outlet body 120.

A shoulder may be formed between the inlet body 110 and the connection body 130 and between the outlet body 120 and the connection body 130, and a space into which the stopper 300 may be inserted may be formed on an outer circumferential surface of the connection body 130.

The core 200 may be disposed between an end of the valve housing 100 and the stopper 300. Specifically, the core 200 may be disposed between the end of the inclined portion 121 and the stopper 300. The core 200 may be formed in a substantially circular plate shape.

The stopper 300 may include an anti-dislodgement portion 320 that prevents the core 200 from being disengaging from the check valve 40, an elastic portion 310 couplable with the valve housing 100, a first guide rib 331 connecting the elastic portion 310 and the anti-dislodgement portion 320, and a second guide rib 332 guiding a reciprocating motion of the core 200 together with the first guide rib 331.

The stopper 300 may be manufactured by bending an elastic spring steel sheet. The material of the stopper 300 may be stainless steel (e.g., SUS304).

The anti-dislodgement portion 320 may be formed to partition an interior of the outlet pipe 33. The anti-dislodgement portion 320 may include a first anti-dislodgement rib 321 and a second anti-dislodgement rib 322 protruding from the first guide rib 331. Specifically, the first anti-dislodgement rib 321 may be formed by being bent from one side of an end of the elastic portion 310, and the second anti-dislodgement rib 322 may be formed by being bent from the other side of the end of the elastic portion 310.

The anti-dislodgement portion 320 may partition a space inside the outlet pipe 33 into a space between the inner surface of the outlet pipe 33 and the first anti-dislodgement rib 321, a space between the first anti-dislodgement rib 321 and the second anti-dislodgement rib 322, and a space between the second anti-dislodgement rib 322 and the inner surface of the outlet pipe 33. As a result, the core 200 may be prevented from being dislodged by the flow of the refrigerant.

A distance between the first anti-dislodgement rib 321 and the second anti-dislodgement rib 322 may gradually narrow from the first guide rib 331 toward the second guide rib 332.

To efficiently prevent the core 200 from dislodging, the distance between the first anti-dislodgement rib 321 and the second anti-dislodgement rib 322 may gradually narrow from the first guide rib 331 toward the second guide rib 332.

The second guide rib 332 may be formed to face the first guide rib 331. The first guide rib 331 and the second guide rib 332 may facilitate the smooth reciprocating motion of the core 200. In other words, the first guide rib 331 and the second guide rib 332 may prevent the reciprocating motion of the core 200 from being impeded, for example, by the core 200 colliding with the inner surface of the outlet pipe 33.

The elastic portion 310 may be formed in a shape of a circular ring cut approximately in half. Specifically, the elastic portion 310 may be formed in a substantially U-shape to surround the connection body 130. A distance between ends of the elastic portion 310 may be larger than an outer diameter of the connection body 130. When assembled, the elastic portion 310 may widen between its ends, and after being assembled with the connection body 130, the distance between its ends may narrow again. As a result, a coupling force between the elastic portion 310 and the connection body 130 may be strengthened.

The outlet pipe 33 may include a sealing portion 33a corresponding to the coupling groove 111 of the inlet body 110. Specifically, after the stopper 300 is coupled to the valve housing 100, the core 200 may be inserted into an insertion space. The check valve to which the valve housing 100, the stopper 300, and the core 200 are coupled may be inserted into the outlet pipe 33 and then fixed inside the outlet pipe 33 by applying pressure to an outer circumferential surface of the outlet pipe 33 corresponding to the coupling groove 111. That is, the outlet pipe 33 may include the sealing portion 33a corresponding to the coupling groove 111 of the check valve 40.

The coupling groove 111 and the sealing portion 33a may fix the check valve 40 inside the outlet pipe 33, and may prevent the refrigerant from flowing between an outer surface of the valve housing 100 and the inner surface of the outlet pipe 33. However, the check valve 40 and the outlet pipe 33 may not necessarily be coupled via the coupling of the coupling groove 111 and the sealing portion. For example, the check valve 40 may be fixed inside the outlet pipe 33 by forming the sealing portions 33a at both ends of the valve housing 100 and fixing the check valve 40 between the plurality of sealing portions 33a.

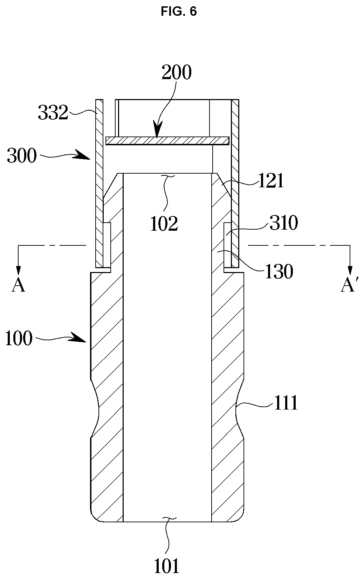

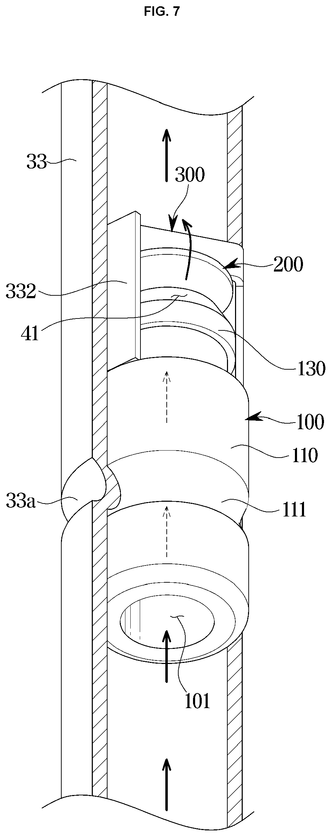

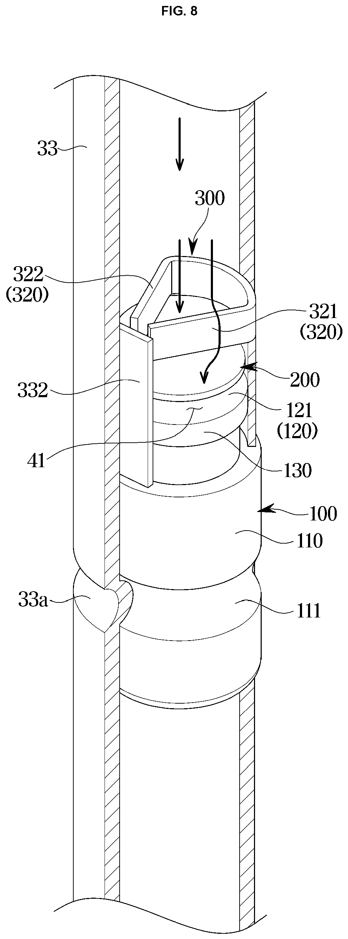

FIG. 6 is a cross-sectional view of the check valve 40 applied to the refrigerator 1 according to an embodiment, FIG. 7 is a cross-sectional view illustrating a state in which a refrigerant flows in a forward direction in the check valve 40 applied to the refrigerator 1 according to an embodiment, and FIG. 8 is a cross-sectional view illustrating a state in which the refrigerant flows in a reverse direction in the check valve 40 according to an embodiment.

A radius of the inlet body 110 may be greater than the sum of an outer radius of the inlet body adjacent to the connection body 130 and a thickness of the elastic portion 310. In other words, when the check valve 40 is coupled to the outlet pipe 33, the outer circumferential surface of the inlet body 110 may be positioned closer to the inner surface of the outlet pipe 33 than the elastic portion 310 and the connection body 130.

Referring to FIG. 7, when no refrigerant is flowing or a small amount of refrigerant is present within the outlet pipe 33, the core 200 may contact an end of the outlet body 120 due to gravity, thereby blocking the guide flow path 103. When a sufficient amount of refrigerant passes through the first evaporator 31, the refrigerant may flow into the check valve 40 through the inlet 101.

Referring to FIG. 8, when the pressure of the refrigerant on the outlet body 120 side is higher r than that on the inlet body 110 side so that the refrigerant flows in the direction from the outlet 102 toward the inlet 101, the refrigerant may not flow into the guide flow path 103 because the core 200 in contact with the end of the inclined portion 121 blocks the outlet. At this time, pressure due to the refrigerant and gravity may be applied to the core 200.

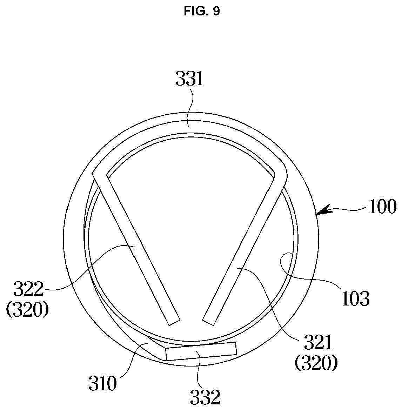

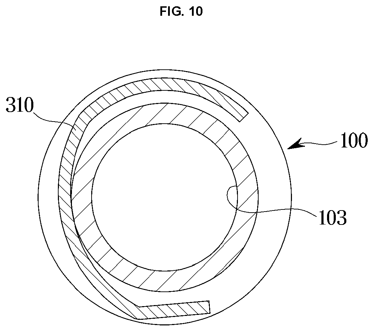

FIG. 9 is a plan view of the check valve 40 according to an embodiment, and FIG. 10 is a cross-sectional view taken along line A-A' of FIG. 6.

In the anti-dislodgement portion 320, the first anti-dislodgement rib 321 and the second anti-dislodgement rib 322 may be formed in a substantially fan-shaped together with an end of the first guide rib 331. The refrigerant may flow through the space inside the outlet pipe 33 partitioned by the first anti-dislodgement rib 321 and the second anti-dislodgement rib 322.

The refrigerant discharged through the outlet 102 via the inlet 101 may flow through the outlet pipe 33 via the space formed between the outer circumferential surface of the core 200 and the inner surface of the outlet pipe 33.

The refrigerator 1 according to an embodiment may include the main body 10 having the freezing compartment 21 and the refrigerating compartment 22, the heat pump including the compressor 2, the condenser 3, the first evaporator 31 provided in the freezing compartment 21 to cool the freezing compartment 21, and the second evaporator 32 provided in the refrigerating compartment 22 to cool the refrigerating compartment 22, the outlet pipe 33 connected to the outlet of the first evaporator 31 to transfer a refrigerant passing through the first evaporator 31 to the compressor 2, and the check valve 40 provided in the outlet pipe 33 and configured to prevent the refrigerant from flowing backward in the outlet pipe 33, wherein the check valve 40 may include the valve housing 100 including the inlet 101, the outlet 102, and the guide flow path 103 formed between the inlet 101 and the outlet 102, the core 200 configured to move forward and backward relative to the valve housing 100 to allow a flow of the refrigerant from the inlet 101 to the outlet 102 and to block a flow of the refrigerant from the outlet 102 to the inlet 101, and the stopper 300 coupled to an outer circumferential surface of the valve housing 100 and configured to receive the core 200, wherein the core 200 is configured to be inserted between the valve housing 100 and a portion of the stopper 300 in a direction intersecting a direction from the inlet 101 toward the outlet 102. According to the present disclosure, the refrigerator 1 according to an embodiment may include the simplified check valve 40 having a simple configuration and being easy to assemble.

The stopper 300 may include the elastic portion 310 coupled to the outer circumferential surface of the valve housing 100, and the anti-dislodgement portion 320 configured to partition an interior of the outlet pipe 33 to prevent the core 200 from being dislodged from the check valve 40 when the refrigerant flows from the inlet 101 to the outlet 102.

The stopper 300 may include the first guide rib 331 configured to connect the elastic portion 310 and the anti-dislodgement portion 320, and the second guide rib 332 formed to face the first guide rib 331 and extending from the elastic portion 310.

The check valve 40 may include the insertion opening 41 formed between the anti-dislodgement portion 320 and an end of the valve housing 100.

The anti-dislodgement portion 320 may include the first anti-dislodgement rib 321 extending from one side of the first guide rib 331, and the second anti-dislodgement rib 322 extending from the other side of the first guide rib 331, and a distance between the first anti-dislodgement rib 321 and the second anti-dislodgement rib 322 may decrease in a direction away from the first guide rib 331.

The valve housing 100 may include the inlet body 110 in which the inlet 101 is formed, the outlet body 120 in which the outlet 102 is formed, and the connection body 130 disposed between the inlet body 110 and the outlet body 120 so as to be coupled to the elastic portion 310.

A diameter of the connection body 130 may be smaller than a diameter of the inlet body 110 and a diameter of the outlet body 120.

The outlet body 120 may include the inclined portion 121 whose thickness gradually decreases in a direction from the inlet 101 toward the outlet 102, and the core 200 may contact an end of the inclined portion 121 when the refrigerant flows in a direction from the outlet 102 toward the inlet 101.

An inner diameter of the guide flow path 103 at the end of the inclined portion 121 may be smaller than a diameter of the core 200.

A radius of an outer diameter of the inlet body 110 may be greater than a sum of a radius of an outer diameter of the connection body 130 and a thickness of the elastic portion 310.

The inlet body 110 may include the coupling groove 111 in which a groove is formed along a circumference of the inlet body 110 to allow the check valve 40 to be coupled to an inside of the outlet pipe 33, and the outlet pipe 33 may include the sealing portion 33a corresponding to the coupling groove 111 to fix the check valve 40.

The inlet 101 may be disposed closer to the lower surface 14 of the main body 10 than the outlet 102.

The stopper 300 may be formed by bending a spring steel sheet of a stainless steel material having an elastic force.

The refrigerator 1 according to an embodiment may include the main body 10 having the storage compartment 20, the heat pump including the compressor 2, the condenser 3, the evaporator 30 provided in the storage compartment 20 to cool the storage compartment 20, the outlet pipe 33 connected to an outlet of the evaporator 30 to transfer a refrigerant passing through the evaporator 30 to the compressor 2, and the check valve 40 provided in the outlet pipe 33 to prevent the refrigerant from flowing backward in the outlet pipe 33, the check valve 40 including the valve housing 100 including the inlet 101 and the outlet 102, the core 200 configured to move forward and backward relative to the valve housing 100, and the stopper 300 coupled to an outer circumferential surface of the valve housing 100, configured to receive the core 200, and formed of a steel sheet of a stainless steel material having an elastic force, wherein the stopper 300 may include the elastic portion 310 coupled to the outer circumferential surface of the valve housing 100, and the anti-dislodgement portion 320 configured to partition an interior of the outlet pipe 33 to prevent the core 200 from being dislodged from the check valve 40 when the refrigerant flows from the inlet 101 to the outlet 102, wherein the core 200 may be configured to be inserted into the insertion opening 41 formed between the valve housing 100 and a portion of the stopper 300 in a direction intersecting a direction from the inlet 101 toward the outlet 102. According to the present disclosure, the refrigerator 1 according to an embodiment may include the simplified check valve 40 having a simple configuration and being easy to assemble.

The stopper 300 may include the first guide rib 331 configured to connect the elastic portion 310 and the anti-dislodgement portion 320, and the second guide rib 332 formed to face the first guide rib 331 and extending from the elastic portion 310.

The anti-dislodgement portion 320 may include the first anti-dislodgement rib 321 extending from one side of the first guide rib 331, and the second anti-dislodgement rib 322 extending from the other side of the first guide rib 331, and a distance between the first anti-dislodgement rib 321 and the second anti-dislodgement rib 322 may decrease in a direction away from the first guide rib 331.

The valve housing 100 may include the inlet body 110 in which the inlet 101 is formed, the outlet body 120 in which the outlet 102 is formed, and the connection body 130 disposed between the inlet body 110 and the outlet body 120 to be coupled to the elastic portion 310, and having a diameter smaller than a diameter of the inlet body 110 and a diameter of the outlet body 120.

The check valve 40 may include the inclined portion 121 whose thickness gradually decreases in a direction from the inlet 101 toward the outlet 102, and the core 200 may contact an end of the inclined portion 121 when the refrigerant flows in a direction from the outlet 102 toward the inlet 101.

The check valve 40 according to an embodiment may include the valve housing 100 including the inlet 101 and the outlet 102, the core 200 configured to move forward and backward with respect to the valve housing 100 to allow a flow of a refrigerant from the inlet 101 to the outlet 102 and to block a flow of the refrigerant from the outlet 102 to the inlet 101, and the stopper 300 coupled to an outer circumferential surface of the valve housing 100 and configured to receive the core 200, wherein the valve housing 100 may include the inlet body 110 in which the inlet 101 is formed, the outlet body 120 in which the outlet 102 is formed, and the connection body 130 disposed between the inlet body 110 and the outlet body 120 to be coupled to the stopper 300, wherein the stopper 300 may include the elastic portion 310 coupled to the outer circumferential surface of the valve housing 100, and the anti-dislodgement portion 320 disposed spaced apart from the elastic portion 310 by a predetermined distance to prevent the core 200 from being dislodged from the stopper 300 when the refrigerant flows from the inlet 101 to the outlet 102, wherein the outlet body 120 may include the inclined portion 121 whose thickness gradually decreases in a direction from the inlet 101 toward the outlet 102, wherein the core 200 is configured to be inserted into the insertion opening 41 formed between an end of the inclined portion 121 and the anti-dislodgement portion 320 in a direction intersecting a direction from the inlet 101 toward the outlet 102. According to the present disclosure, it is possible to provide the check valve 40 including the valve housing 100, the stopper 300, and the core 200 that may be easily assembled or disassembled.

The stopper 300 may include the first guide rib 331 configured to connect the elastic portion 310 and the anti-dislodgement portion 320, and the second guide rib 332 formed to face the first guide rib 331 and extending from the elastic portion 310. The anti-dislodgement portion 320 may include the first anti-dislodgement rib 321 extending from one side of the first guide rib 331, and the second anti-dislodgement rib 322 extending from the other side of the first guide rib 331. A distance between the first anti-dislodgement rib 321 and the second anti-dislodgement rib 322 may decrease in a direction away from the first guide rib 331.

The effects to be obtained from the present disclosure are not limited to the effects mentioned above, and other unmentioned effects may be clearly understood by those of ordinary skill in the art to which the present disclosure pertains from the description below.

While the present disclosure has been particularly described with reference to exemplary embodiments, it should be understood by those of skilled in the art that various changes in form and details may be made without departing from the spirit and scope of the present disclosure.

## Claims

1. A refrigerator, comprising:
a main body comprising a freezing compartment and a refrigerating compartment;
a heat pump comprising a compressor, a condenser, a first evaporator provided in the freezing compartment to cool the freezing compartment, and a second evaporator provided in the refrigerating compartment to cool the refrigerating compartment;
an outlet pipe connected to an outlet of the first evaporator to transfer a refrigerant passing through the first evaporator to the compressor; and
a check valve provided in the outlet pipe and configured to prevent the refrigerant from flowing backward in the outlet pipe,
wherein the check valve comprises:
a valve housing comprising an inlet, an outlet, and a guide flow path formed between the inlet and the outlet;
a core configured to move forward and backward relative to the valve housing to allow a flow of the refrigerant from the inlet to the outlet and to block a flow of the refrigerant from the outlet to the inlet; and
a stopper coupled to an outer circumferential surface of the valve housing and configured to receive the core,
wherein the core is configured to be inserted between the valve housing and a portion of the stopper in a direction intersecting a direction from the inlet toward the outlet.

2. The refrigerator of claim 1, wherein the stopper comprises:
an elastic portion coupled to the outer circumferential surface of the valve housing; and
an anti-dislodgement portion configured to partition an interior of the outlet pipe to prevent the core from being dislodged from the check valve when the refrigerant flows from the inlet to the outlet.

3. The refrigerator of claim 2, wherein the stopper comprises:
a first guide rib configured to connect the elastic portion and the anti-dislodgement portion; and
a second guide rib formed to face the first guide rib and extending from the elastic portion.

4. The refrigerator of claim 3, wherein the check valve comprises an insertion opening formed between the anti-dislodgement portion and an end of the valve housing.

5. The refrigerator of claim 4, wherein the anti-dislodgement portion comprises:
a first anti-dislodgement rib extending from one side of the first guide rib; and
a second anti-dislodgement rib extending from the other side of the first guide rib,
wherein a distance between the first anti-dislodgement rib and the second anti-dislodgement rib decreases in a direction away from the first guide rib.

6. The refrigerator of claim 4, wherein the valve housing comprises:
an inlet body in which the inlet is formed;
an outlet body in which the outlet is formed; and
a connection body disposed between the inlet body and the outlet body to be coupled to the elastic portion.

7. The refrigerator of claim 6, wherein a diameter of the connection body is smaller than a diameter of the inlet body and a diameter of the outlet body.

8. The refrigerator of claim 7, wherein the outlet body comprises:
an inclined portion whose thickness gradually decreases in a direction from the inlet toward the outlet,
wherein the core contacts an end of the inclined portion when the refrigerant flows in a direction from the outlet toward the inlet.

9. The refrigerator of claim 8, wherein an inner diameter of the guide flow path at the end of the inclined portion is smaller than a diameter of the core.

10. The refrigerator of claim 7, wherein a radius of an outer radius of the inlet body is greater than a sum of a radius of an outer radius of the connection body and a thickness of the elastic portion.

11. The refrigerator of claim 6, wherein the inlet body comprises a coupling groove formed along a circumference of the inlet body to allow the check valve to be coupled to an inside of the outlet pipe, and
the outlet pipe comprises a sealing portion corresponding to the coupling groove to fix the check valve.

12. The refrigerator of claim 6, wherein the inlet is disposed closer to a lower surface of the main body than the outlet.

13. The refrigerator of claim 2, wherein the stopper is formed by bending a spring steel sheet of a stainless steel material having an elastic force.

14. A refrigerator, comprising:
a main body comprising a storage compartment;
a heat pump comprising a compressor, a condenser, and an evaporator provided in the storage compartment to cool the storage compartment;
an outlet pipe connected to an outlet of the evaporator to transfer a refrigerant passing through the evaporator to the compressor; and
a check valve provided in the outlet pipe to prevent the refrigerant from flowing backward in the outlet pipe, the check valve comprising a valve housing comprising an inlet and an outlet, a core configured to move forward and backward relative to the valve housing, and a stopper coupled to an outer circumferential surface of the valve housing, configured to receive the core, and formed of a steel sheet of a stainless steel material having an elastic force,
wherein the stopper comprises:
an elastic portion coupled to the outer circumferential surface of the valve housing; and
an anti-dislodgement portion configured to partition an interior of the outlet pipe to prevent the core from being dislodged from the check valve when the refrigerant flows from the inlet to the outlet,
wherein the core is configured to be inserted into an insertion opening formed between the valve housing and a portion of the stopper in a direction intersecting a direction from the inlet toward the outlet.

15. The refrigerator of claim 14, wherein the stopper comprises:
a first guide rib configured to connect the elastic portion and the anti-dislodgement portion; and
a second guide rib formed to face the first guide rib and extending from the elastic portion.
